# EUROPÄISCHE PATENTSCHRIFT

(11) **EP 1 942 296 B1**
(45) Veröffentlichungstag und Bekanntmachung des Hinweises auf die Patenterteilung: **28.01.2015**
(21) Anmeldenummer: 06127073.2
(22) Anmeldetag: 22.12.2006
(51) Int. Cl.: F16L 11/04, B32B 1/08, C08L 77/06, B32B 27/34, C08L 23/08, C08L 23/14, C08L 23/16, C08L 51/06, C08L 77/00, C08L 77/02

(54) **Hydraulikleitung, insbesondere Kupplungsleitung und Verfahren zu deren Herstellung**
Hydraulic line, in particular coupling line and method for its production
Ligne hydraulique, en particulier ligne de couplage et son procédé de fabrication

(43) Veröffentlichungstag der Anmeldung: 09.07.2008
(73) Patentinhaber: EMS-CHEMIE AG, 7013 Domat-Ems (CH)
(72) Erfinder: Hoffmann, Botho, 7013 Domat/Ems (CH); Schwitter, Paul, 8718 Schänis (CH); Caviezel, Heinz, 7000 Chur (CH); Emerschitz, Thomas, 7013 Domat/Ems (CH)
(74) Vertreter: Bremi, Tobias Hans

(56) Entgegenhaltungen:
- EP-A1- 1 251 148
- GB-A- 1 241 361

## Beschreibung

### TECHNISCHES GEBIET

Die vorliegende Erfindung betrifft Hydraulikleitungen, insbesondere Kupplungsleitungen, auf Basis von thermoplastischen Polymeren für Fahrzeuge, sowie Verfahren zu deren Herstellung.

### STAND DER TECHNIK

Die vorliegende Erfindung bezieht sich also auf Kunststoffrohre oder Leitungen, deren Wandung aus einer oder mehreren Schichten besteht. Kunststoffrohre aus Polyamid sind schon lange Stand der Technik und werden sehr vielseitig zum Beispiel für Brems-, Hydraulik-, Kraftstoff-, Kühl-, Pneumatikleitungen eingesetzt (vgl. DIN 73378: "Rohre aus Polyamid für Kraftfahrzeuge").

Die im Kraftfahrzeugbau eingesetzten Kunststoffrohre oder -leitungen müssen eine Vielzahl von Anforderungen erfüllen. Für den Fall einer hydraulischen Kupplung kann deren Funktionsweise folgendermassen beschrieben werden.

Die einzelnen Komponenten von Hydrauliksystemen sind: Behälter mit Hydraulikflüssigkeit, Kupplungspedal, Geberzylinder, Hydraulikleitung, Nehmerzylinder und Ausrücker, wobei die Aufzählung dieser Komponenten nur beispielhaft ist und je nach Hersteller verschiedene weitere Komponenten wie Magnetventile, Speicher, Rückförderpumpen hinzukommen können. Nach Betätigung des Kupplungspedals wird über den Geberzylinder ein Druck im System aufgebaut, der über die Hydraulikleitung auf den Nehmerzylinder übertragen wird. Als Transfermedium dient dabei das Hydraulikflüssigkeit, das sich einerseits in der Leitung und andererseits im Hydraulikflüssigkeitvorratsbehälter befindet. Vom Nehmerzylinder wird die Kraft auf den Ausrücker übertragen, wodurch das Getriebe vom Motor getrennt wird.

Um eine einwandfreie Funktion der Kupplung zu gewährleisten, müssen von der Hydraulikleitung u. a. folgende Anforderungen erfüllt werden: Eine genügende Berstfestigkeit bis 130 °C, eine möglichst geringe Volumenänderung über den Temperaturbereich von -40 bis +120 °C und eine Wasserpermeation von aussen in die Hydraulikflüssigkeit von unter 2 bis 3 %, keine Abbaureaktionen mit der Hydraulikflüssigkeit, eine hohe Temperaturbeständigkeit, sowie Kälteschlagzähigkeit bis -40 °C. Kurzfristig muss die Hydraulikleitung Umgebungstemperaturen von bis zu 150°C standhalten. Besonders nachteilhaft für die einwandfreie Funktionsweise einer hydraulischen Kupplung ist eine zu hohe Wasseraufnahme der Hydraulikflüssigkeit, was bei Temperaturen oberhalb von 100 °C zum Schäumen des Hydraulikmediums führt, und eine zu grosse Volumenänderung der Leitung, wodurch der Kupplungsweg verlängert wird.

Bislang werden Hydraulikleitungen üblicherweise als verzinkte Stahlleitungen ausgebildet, die mit Hilfe von Schellen oder dergleichen an den Wänden von Lastkraftwagen, insbesondere Ladebordwänden, befestigt werden oder die im Personenkraftwagenbereich als Kupplungsleitung eingesetzt werden. Metallrohre besitzen viele der oben gewünschten Eigenschaften. Allerdings ist die Herstellung dieser Metallrohre sehr aufwändig. Weiterhin ist nachteilig bei Rohren aus Stahl beispielsweise deren Gewicht und eine schlechte Korrosionsbeständigkeit. Auf Grund der hohen Steifigkeit ist zudem der schnelle Einbau solcher Rohre erschwert.

Die Hydraulikleitungen bzw. Rohre befinden sich im Allgemeinen zudem in einer aggressiven Umgebung, in denen diese Rohre dem chemischen Angriff von Mineralsalzlösungen und von der darin geförderten Flüssigkeit ausgesetzt sind und dabei, wie oben erwähnt wurde, hohen Drücken über einen weiten Temperaturbereich von z. B. -40 °C bis + 120 °C Stand halten müssen. Die in den Hydraulikleitungen bzw. -rohren zur Kraftübertragung eingesetzten Medien müssen eine Sicherungsfunktion, wie zum Beispiel bei Bremsen erfüllen. Die Hydraulikflüssigkeiten sind daher Gegenstand von vielen internationalen Normen wie z. B. SAE J1703, FMVSS 116, ISO 4925. Die in FMVSS 116 beschriebenen Merkmale haben in den USA sogar Gesetzeskraft erlangt und gelten weltweit als massgebend. Vom Department of Transportation (DOT) wurden bezüglich der wichtigsten Eigenschaften verschiedene Güteklassen definiert. Glykoletherflüssigkeiten sind die hier am häufigsten eingesetzten Hydraulik- bzw. Bremsflüssigkeiten. Es handelt sich dabei hauptsächlich um Monoether niedriger Polyethylenglykole. Mit diesen Komponenten lassen sich Hydraulik- bzw. Bremsflüssigkeiten herstellen, die den Anforderungen von DOT3 oder DOT4 entsprechen. Von Nachteil ist, dass sie aufgrund der hygroskopischen Eigenschaften relativ schnell Wasser aufnehmen und dadurch der Siedepunkt sinkt.

Damit für die Montage der Hydraulikleitungen bzw. -rohre eine genügende Flexibilität vorhanden ist bzw. unterschiedliche Bewegungen von Motor und Getriebe ausgeglichen werden können, werden für die Hydraulikleitung bewegliche Elemente eingesetzt.

Um ein einfacheres Produktionsverfahren zu ermöglichen, werden, wie bereits erwähnt, Hydraulikleitungen auf Basis von Thermoplasten entwickelt. Hierbei kommen Standardpolyamide zum Einsatz, die neben Hitze- und UV-Stabilisatoren, Farbstoffen und Verarbeitungshilfsmitteln keine weiteren Modifizierungen enthalten (s. oben angegebene DIN 73378). Diese Monoleitungen haben den Nachteil, dass sie zum einen eine relativ hohe Wasserpermeation von aussen nach innen erlauben und zum anderen im Bereich von -40 bis +120 °C eine hohe Volumenänderung aufweisen. Zur Reduktion der Volumenänderung können solche Thermoplastrohre auch Verstärkungselemente besitzen (vergleiche z.B. US-A-2,614,058).

Bisher ist es nicht gelungen, die Kupplungsleitung aus Metall durch eine Kupplungsleitung aus Kunststoff vollständig abzulösen. Insbesondere bei Kupplungleitungen bzw. Druckleitungen, die länger als 70 - 100 cm sind, können die Lösungen aus Kunststoff aus technischer Sicht nicht mit den Metallleitungen konkurrieren.

So ist für die jeweils verwendeten teilkristallinen Polyamide bekannt, dass diese einen umgekehrt s-förmigen Verlauf des dynamischen Schubmoduls G', aufgenommen über die Temperatur T, mit starker Spreizung aufweisen. Dieser Verlauf ist bereits ein Indiz für den drohenden Verlust der Formbeständigkeit bei sukzessiver Erhöhung der Temperatur. Verstärkt wird die Abnahme der Formbeständigkeit bei Einfluss zusätzlicher Kräfte, wie beispielsweise Druck. Die daraus resultierende mangelnde mechanische Festigkeit führt insbesondere bei Hochtemperaturanwendungen bis 150 °C dazu, dass das Formteil an Masshaltigkeit verliert. Im Fall von Anwendungen, wo zusätzlich zur Temperatur noch ein Druck auf das Formteil einwirkt, z.B. für die hier relevanten Hydraulik- und Pneumatikanwendungen, besteht die Gefahr, dass das Formteil sich allmählich oder auch nur temporär unter erhöhtem Druck aufweitet.

Die Aufweitung führt dazu, dass der Radius der Kupplungsleitung um einige Prozente zunimmt. Diese minimale Zunahme ist bereits ausreichend, dass der Druckpunkt in der Kupplungsleitung merklich wandert. Aus dieser Aufweitung kann ein totales Versagen des Kupplungssystems resultieren, da eine Kraftübertragung vom Kupplungsgeber auf den Kupplungsnehmer über die Kupplungsleitung nicht mehr erfolgt. Aus diesem Grund sind derzeit Kupplungsleitungen aus Kunststoff auf eine Länge von 0.70 m limitiert. Grössere Abmessungen werden durch Kupplungsleitungen aus Metall mit/ohne Gummielement abgedeckt.

Folgende Dokumente aus dem Stand der Technik sollen beispielhaft dazu dienen, den allgemeinen technologischen Hintergrund der vorliegend beschriebenen Erfindung zu erläutern:
In der DE 199 39 689C2 wird z.B. eine 3-schichtige Kupplungsleitung mit einer aus Polyester-Garn gewickelten Mittelschicht beansprucht. Innen- und Aussenschicht können aus Polyamid gefertigt sein, wobei PA11 und PA12 genannt werden. Aus der Beschreibung geht nicht hervor, inwiefern die Armierungsschicht die Volumenzunahme unter Druckbelastung beeinflusst.

In der DE 199 51 947A1 wird eine teilweise gewellte Kupplungsleitung, ohne Angabe einer spezifischen Polymerzusammensetzung, offenbart.

In der WO2006/037615 werden flexible semikristalline Polyamide und deren Verwendung als Leitungen im Fahrzeugbau beschrieben. Insbesondere werden spezifische Copolyamide der allgemeinen Form PA X.Y/Z beschrieben, wobei X ein Diamin, Y eine Disäure und Z ein Lactam oder eine Aminocarboxylsäure sind, welche alle als Ausgangsmaterialien in der Copolymerisation verwendet werden. Die Komponente Z ist erforderlich zur Senkung der Kristallinität des Materials und die in den Beispielen verwendeten Schlagzähigkeitsverbesserer sind stets teilweise vernetzt u.a. durch Einmischen von entsprechenden Vernetzungshilfsmitteln.

Die in der DE 102 04 395 beschriebene Kupplungsleitung weist mindestens eine Schicht aus einer Polyamid-Formmasse auf, welche nanoskalige Füllstoffe enthält. Als mögliches Basis-Polyamid-Material für eine solche Schicht wird eine Vielzahl von Polyamid-Systemen angegeben, die Beispiele beschränken sich aber auf Polyamid 12.

In der DE 103 35 889 wird eine Kupplungsleitung mit einer bestimmten Volumenausdehnung und einer definierten Wasseraufnahme aus Polayamid 12 (PA12) angegeben. Hergestellt wird eine solche Leitung aus nachfolgender Polymerzusammensetzung:
- Polyamid 12 mit MVR < 100 ml /10 min (275 °C/5 kg)
- Syndiotaktischem Polystyrol
- Syndiotaktischem Polystyrol-Pfropfcopolymer (MAH-Pfropfung)
- Anorganische Füllstoffe.

Gegenüber dem Stand der Technik soll aus der beanspruchten Zusammensetzung eine Kupplungsleitung mit verringerter Volumenaufnahme bei 30 bar Belastung auch bei höherer Temperatur hergestellt werden können.

In der DE 10 2004 054 390 wird eine Kupplungsleitung beschrieben, hergestellt aus einer polymeren Zusammensetzung, enthaltend
- 40 - 95 % eines teilkristallinen Polyamids, insbesondere beispielhaft dokumentiert durch PA6, PA 12, PA612
- 4 - 55 % einer grenzflächenaktiven Verbindung (Verträglichkeitsvermittler auf Basis von Styrol)
- 0.1- 55 % einer Wirkkomponente (amorphe Verbindung, zum Beispiel amorpher Kunststoff mit einem T_{g} > 120 °C),
wobei bestimmte Anforderungen hinsichtlich der Berstdrücke, Vergleichsspannungen und Wärmedehnung erfüllt werden müssen. Angebliche Aufgabe der Erfindung ist es, Kupplungsleitungen aus einer polymeren Zusammensetzung auf Basis von teilkristallinen Polyamiden bereitzustellen, deren relative Dehnbarkeit bei höherer Temperatur reduziert ist und die damit weniger der Längenlimitierung unterliegen.

In der deutschen Anmeldung DE 100 30 716 wird des weiteren ein schlagzähes Blend aus Polyamid, Ethylen-propylen-copolymer-Schlagzähmodifier und einem speziellen Terpolymer auf Basis olefinischer und acrylischer Verbindungen beschrieben. Als Polyamide wird eine Vielzahl von Systemen angegeben mit der spezifischen Massgabe, dass diese einen Überschuss an Aminoendgruppen gegenüber den Carboxylendgruppen besitzen. In den Beispielen wird ausschliesslich ein solches PA 612 angegeben und mit dem Stand der Technik verglichen. Beschreibung und Unteransprüche erwähnen u.a. auch die Anwendung "Hydraulikleitung", allerdings werden keine weiteren Angaben zur Charakterisierung von Kupplungsleitungen gemacht.

Die GB 1241361 beschreibt thermoplastische Polymer-Mischungen bestehend aus einem Polyamid und einem Ethylen-Copolymer, welches als Ethylen-Terpolymer mit bestimmten Ausgangs-Monomeren ausgestaltet ist, wobei diese Mischung als besonders flexibel und schlagzäh beschrieben wird. Im Rahmen einer Vielzahl von Beispielen findet sich auch eines, in welcher das Polyamid ein Polyamid 610 ist. Unter anderem wird darauf hingewiesen, dass das Material dazu verwendet werden kann, um eine Hydraulikleitung herzustellen.

Die EP 1251148 beschreibt eine Polyamid-basierte Hydraulikleitung, wobei das Polyamid in Mischung mit einer Schlagzähkomponente offenbart wird.

### DARSTELLUNG DER ERFINDUNG

Der Erfindung liegt demnach u.a. die Aufgabe zugrunde, eine verbesserte Hydraulikleitung auf Basis eines thermoplastischen Polyamids vorzuschlagen. Insbesondere soll die Hydraulikleitung geeignet sein, auch für grössere Längen ausgelegt werden zu können, ohne dass dabei eine übermässige gesamte Volumenausdehnung resultiert.

Unerwarteter Weise wurde nun gefunden, dies nach einer Reihe von Versuchen, dass die Anforderungen an eine längere Kupplungsleitung, insbesondere für eine Länge von wesentlich mehr als 0.7m, wie dies beispielsweise bei Autos für Rechtslenker häufig erforderlich ist, erfüllt werden können, wenn die Hydraulikleitung auf Basis von thermoplastischen Polymeren mindestens eine Schicht aus einer spezifisch aufgebauten Formmasse auf Basis von Polyamid besteht. Die Polyamid-Formmasse ist dabei aus folgenden Bestandteilen aufgebaut:
(A) 45 - 97 Gew.-% Polyamid 610;
(B) 5 - 30 Gew.-% amorphes und/oder mikrokristallines Polyamid und/oder Copolyamid, mit einer Glasübergangstemperatur oberhalb von 120 °C;
(C) 2 - 20 Gew.-% Schlagzähkomponente in Form eines Copolymers auf Basis von Ethylen und/oder Propylen
(D) 1 - 10 Gew.-% Additive.

Dies mit der Massgabe, dass die Summe der Komponenten A-D 100 Gew.-% ergibt.

Wie anfolgend gezeigt werden wird, zeigen Hydraulikleitungen aus einer solchen Formmasse signifikant verbesserte, das heisst wesentlich niedrigere Werte der Volumenexpansion nicht nur bei Raumtemperatur, sondern insbesondere auch bei erhöhten Temperaturen von 80 °C, 100 °C und 120 °C, wie sie beim Fahrzeugbau relevant sind. Entsprechend wird es unerwarteter Weise möglich, längere Leitungen herzustellen, es ist aber gleichermassen möglich, insbesondere bei Verwendung als Kupplungsleitungen, diese dünnwandiger ausführen zu können.

Bevorzugtermassen ist dabei das Polyamid 610 vollständig unvernetzt. Gleichermaßen ist die Schlagzähkomponente bevorzugtermassen unvernetzt.

Gemäss Erfindung liegt ein Minimum an Komponente B vor, namentlich liegt die Komponente B in einem Anteil von 5-30 Gew.-%, bevorzugt in einem Anteil von 5-20 Gew.%, vor.

Wie eingangs erläutert, kann die Hydraulikleitung eine Mehrschichtleitung sein. Mit anderen Worten kann es sich um eine Mehrschichtleitung handeln, bei welcher wenigstens eine der Schichten aus der oben definierten Formmasse gebildet ist. Eine solche Mehrschichtleitung kann beispielsweise in einem Coextrusionsprozess hergestellt sein. Wenigstens eine der weiteren Schichten ist normalerweise im Falle einer Mehrschichtleitung eine Barriereschicht, beispielsweise aus PP.

Betreffend Mehrschichtleitungen werden 2- oder 3-schichtige Leitungen bevorzugt. Insbesondere kommt neben der beschriebenen Polyamidschicht als mindestens eine weitere Schicht eine so genannte Barriereschicht, bevorzugtermassen eine Wasserbarriere, die die Diffusion von Wasser in die Hydraulikflüssigkeit reduziert, zum Einsatz. Die Barriereschicht kann aus Formmassen auf Basis von folgenden Systemen gebildet werden:
Inerte, quellungsbeständige Polymere wie z.B. halogenierte oder nicht halogenierte Homo- oder Copolyolefine, deren Mischungen oder Blends. Bevorzugt sind neben Homopolyolefinen die Copolyolefine des Ethylen bzw. Propylen mit weiteren alpha - Olefinen. Geeignet sind chlorierte, besonders auch fluorierte Polyolefine und Copolyolefine und auch Polyvinylchlorid. Insbesondere geeignet sind beispielsweise Systeme, wie sie in der EP-A-0 436 923 beschrieben sind. Der Offenbarungsgehalt dieses Dokumentes wird hinsichtlich Barriereschicht ausdrücklich in den Offenbarungsgehalt dieser Anmeldung eingeschlossen.

Weiterhin möglich, und gleichermassen diesbezüglich in den Offenbarungsgehalt dieser Anmeldung eingeschlossen, sind Systeme, wie sie in der EP-A-0 670 774 beschrieben sind. Das dort beschriebene Polyvinylidenfluorid (PVDF) verfügt sowohl über eine ausgezeichnete Hochtemperatur- und Hydrolysebeständigkeit als auch über hervorragende Sperreigenschaften gegen chemische Agenzien, insbesondere gegen sowohl reine Kohlenwasserstoffe als auch Alkohol oder deren Gemische. Eine Zwischenschicht, die PVDF oder dessen Copolymeres oder deren Blend oder Mischung enthält, zeigt zudem die notwendige Haftung zu sowohl einer gegebenenfalls vorhandenen Aussenschicht als auch zu einer gegebenenfalls vorhandenen Innenschicht. Eine solche Zwischenschicht oder Barriereschicht kann das PVDF bzw. dessen Copolymere in allen Gewichtsanteilen enthalten, bevorzugt sind Anteile kleiner 70 und solche kleiner 50 sind besonders bevorzugt.

Weitere Systeme sind in der EP-A-659 534 sowie in der EP-A-659 535 beschrieben, und auch deren Offenbarungsgehalte seien hinsichtlich möglicher Barriereschichten ausdrücklich in den Offenbarungsgehalt der vorliegenden Anmeldung eingeschlossen: die dort beschriebenen Systeme sind inerte, quellungsbeständige Polymere für eine Innenschicht namentlich halogenierte oder nicht halogenierte Homo- oder Copolyolefine, deren Mischungen oder Blends. Bevorzugt sind neben Homopolyolefinen die Copolyolefine des Ethylen bzw. Propylen mit weiteren alpha-Olefinen. Weiter beschrieben werden chlorierte, besonderes auch fluorierte Polyolefine und Copolyolefine und auch Polyvinylchlorid sowie Blends aus Polyolefinen und vernetzten oder teilvernetzten Elastomeren. Für zweischichtige Leitungen können die Homo- oder Copolyolefine selbst reaktive, verträglich machende Gruppen tragen, wie sie z.B. durch Pfropfung mit alpha-ungesättigten Säuren bzw. ihren Derivaten oder durch geeignete Comonomere wie z. B. Acryl- oder Methacrylsäuren oder deren Derivate zu erzielen sind. Weitere inerte, quellungsbeständige Polymere für die Innenschicht sind halogenierte oder nicht halogenierte Homo- oder Copolyolefine, deren Mischungen oder Blends. Bevorzugt sind dabei neben Homopolyolefinen die Copolyolefine des Ethylen bzw. Propylen mit weiteren alpha -Olefinen. Geeignet sind chlorierte, besonders auch fluorierte Polyolefine und Copolyolefine und auch Polyvinylchlorid. Von besonderem Vorteil sind auch Blends aus Polyolefinen und vernetzten oder teilvernetzten Elastomeren. Für zweischichtige Leitungen sollten die Homo- oder Copolyolefine selbst reaktive, verträglich machende Gruppen tragen, wie sie z.B. durch Pfropfung mit alpha -ungesättigten Säuren bzw. ihren Derivaten oder durch geeignete Comonomere wie z.B. Acryl- oder Methacrylsäuren oder deren Derivate zu erzielen sind. Eine solche innere Schicht besteht vorzugsweise aus Polymeren der Gruppe ETFE, PTFE, PVDF, PPS, PPE, POM, EVOH, PBT, EVA und deren Blends.

Des weiteren sei auf Systeme gemäss der EP-A-0 754 898 hingewiesen, deren Offenbarungsgehalt ebenfalls eingeschlossen sei. Das dort beschriebene vernetzte Polyethylen weist eine aussergewöhnlich hohe Spannungsrissbeständigkeit gegenüber aggressiven Säuren, wie auch gegenüber Laugen auf. Darüber hinaus wirkt das dort beschriebene Polyethylen mit hoher Dichte (HDPE) als ausgezeichnete Wasserbarriere, so dass eine berstdruckbeständige Polyamidaussenschicht gemäss obigem Aufbau gut vor der zerstörenden Wirkung von Wasser geschützt wird. Aus verarbeitungstechnischen Gründen ist dabei ein silanvernetztes PE anderen Systemen wie peroxid-, oder strahlenvernetzten PE vorzuziehen.

Zudem sei auf Systeme gemäss der EP-A-1 362 890 verwiesen, deren Offenbarungsgehalt ebenfalls eingeschlossen sei. Eine innere Schicht wie dort beschrieben besteht aus einer Formmasse aus thermoplastischen, haftungsmodifizierten Elastomeren mit einer vernetzbaren Kautschukphase. Die thermoplastischen Elastomere (TPE) werden ausgewählt aus der Gruppe der TPE-Materialien, die aus Polyolefin-Elastomeren, d.h. der sogenannten Santoprene-Typen, die ein thermoplastisches Polyolefin-Copolymer, insbesondere Polypropylen, welches mit einem BlockCopolymer aus Styrol/konjugiertem Dien/Styrol und/oder seinen halogenierten Derivaten hergestellt ist, kompoundiert sein kann, mindestens ein funktionalisiertes, vernetzbares kautschukelastisches Material aus der Gruppe der olefinischen Kautschuke, die unvernetzt, teil- oder vollvernetzt sein können, der Acrylate und der Silikone, und einen Polyamid-Verträglichkeitsvermittler, enthalten, der TPE-Materialien des Typs von dynamisch vulkanisierten Gummis in einer Polymermatrix, der thermoplastischen Polystyrol-Elastomeren (TPE-S) oder Styrol-Copolymer-Elastomer-Compounds, der thermoplastischen Chlor-Elastomeren, der Polyesterelastomere, der Polyamidelastomere, der thermoplastischen Elastomere auf Fluorbasis, der thermoplastischen Polyurethan-Elastomere besteht.

Zu guter letzt sei hinsichtlich möglicher Barriereschichten verwiesen auf die EP-A- 1 596 113, der Offenbarungsgehalt diesbezüglich ebenfalls mit eingeschlossen sei. Insbesondere eine dort beschriebene bevorzugte Ausführungsform gemäss Absatz 0119 in der Patentschrift, bei welcher ein mit Organosilan gepfropftes und durch Aufnahme von Wasser vernetztes HDPE als Innenschicht, und eine kompatible Zwischenschicht aus einem mit Maleinsäureanhydrid gepfropftem Polyolefin angegeben wird. Wird gepfropftes Polypropylen verwendet, so hat dies im Vergleich zu gepfropftem HDPE den höheren Schmelzpunkt.

Bevorzugtermassen wird die Barriereschicht möglichst dünnwandig ausgelegt, um die Volumenexpansion der Hydraulikleitung zu minimieren.

Bevorzugtermassen handelt es sich bei der Hydraulikleitung aber um eine Monoleitung, das heisst um eine Leitung, welche nur aus einer Schicht aus der oben definierten Formmasse besteht, oder auch aus mehreren Schichten dieser so definierten Formmasse, gegebenenfalls in leicht veränderter Zusammensetzung.

Bevorzugtermassen verfügt die Komponente A über eine Lösungsviskosität ηᵣₑₗ, gemessen in m-Kresol, bei 0.5 Gew.-% und 20 °C, im Bereich von 1.7 bis 2.8, insbesondere von 1.9 bis 2.5.

Alternativ oder zusätzlich verfügt ihrerseits die Komponente B über eine Lösungsviskosität ηᵣₑₗ, gemessen in m-Kresol, bei 0.5 Gew.-% und 20 °C, im Bereich von 1.4 bis 2.0, insbesondere von 1.6 bis 1.9.

Die angegebenen Werte von ηᵣₑₗ verstehen sich nach DIN EN ISO 307.

Gemäss einer bevorzugten Ausführungsform der Hydraulikleitung verfügt die Komponente A aus PA610 über einen Aminoendgruppenüberschuss. Es wird bevorzugt, wenn eine Amionendgruppenkonzentration zwischen 20 und 120 mmol/kg, insbesondere zwischen 20 und 70 mmol/kg vorliegt.

Alternativ oder zusätzlich ist es bevorzugt, dass die Komponente B ihrerseits einen Aminoendgruppenüberschuss aufweist, dies mit einer analogen Aminoendgruppenkonzentration.

Grundsätzlich kann es sich, wie bei der obigen Definition angegeben, bei der Komponente B um ein mikrokristallines Polyamid oder um ein amorphes Polyamid oder um eine Mischung zweier (oder mehrerer) solcher Polyamide (oder gleichennassen der entsprechenden Copolyamide) handeln. Wenn ein mikrokristallines Polyamid respektive Copolyamid Verwendung findet, so wird bevorzugt, dass dieses mikrokristalline Polyamid und/oder Copolyamid eine Schmelzenthalpie im Bereich von 4-40 J/g, insbesondere im Bereich von 4 bis 25 J/g aufweist (gemessen mit Differential Scanning Calorimetry, DSC). Bevorzugtermassen handelt es sich bei mikrokristallinen Polyamid/Copolyamid um ein Polyamid, welches, wenn ohne weitere Bestandteile verarbeitet, transparente Formteile ergibt.

Gemäss einer bevorzugten Ausführungsform handelt es sich bei der Komponente B um ein mikrokristallines Polyamid und/oder Copolyamid auf Basis eines cycloaliphatischen Diamins und/oder eines Diamins mit aromatischem Kern (z. B. MXDA oder PXDA). Bevorzugt wird dabei, dass dieses auf Basis von cycloaliphatischen Diaminen und aliphatischen Dicarbonsäuren mit 10 bis 18 Kohlenstoffatomen aufgebaut ist, wobei es sich beim cycloaliphatischen Diamin bevorzugtermassen um MACM und/oder PACM und/oder IPD (Isophorondiamin) mit oder ohne zusätzliche Substituenten, und bei der Komponente B als Ganzes insbesondere bevorzugt um ein Copolyamid des Typs MACM/PACM jeweils mit aliphatischen Dicarbonsäuren mit 10 bis 18 Kohlenstoffatomen wie zum Beispiel MACM12/PACM12, handelt, dies bevorzugtermassen mit einer PACM-Konzentration grösser 55 mol-%, insbesondere grösser 70 mol-%. Dabei steht MACM für die ISO-Bezeichnung Bis-(4-amino-3-methyl-cyclohexyl)-methan, welches unter dem Handelsnamen 3,3'-Dimethyl-4-4'-diaminodicyclohexylmethan als Laromin C260-Typ (CAS Nr. 6864-37-5) kommerziell erhältlich ist. Die Ziffer nach dem Begriff MACM steht jeweils für eine aliphatische lineare Dicarbonsäure (C12 z.B. DDS, Dodecandisäure), mit welcher das Diamin MACM polymerisiert ist. PACM steht für die ISO-Bezeichnung Bis-(4-amino-cyclohexyl)-methan, welches unter dem Handelsnamen 4,4'-Diaminodidyclohexymethan als Dicykan-Typ (CAS Nr. 1761-71-3) kommerziell erhältlich ist.

Alternativ oder zusätzlich kann es sich, wie bereits erläutert, bei der Komponente B um ein amorphes Polyamid und/oder Copolyamid handeln, dann bevorzugtermassen mit einer Schmelzenthalpie von weniger als 4 J/g (gemessen mit Differential Scanning Calorimetry, DSC). Bevorzugtermassen verfügt die Komponente B über eine Glasübergangstemperatur von mehr als 140 °C und insbesondere bevorzugt von mehr als 150 °C.

Eine weitere bevorzugte Ausführungsform ist dadurch gekennzeichnet, dass die Komponente B ein amorphes Polyamid und/oder Copolyamid auf Basis von aliphatischen und/oder cycloaliphatischen Diaminen ist, bevorzugt werden amorphe Polyamide des Typs MACMI/12, wobei der Gehalt an Laurinlactam in diesem Fall bevorzugt kleiner als 35 mol-%, insbesondere kleiner 20 mol-% ist. Dabei steht jeweils I für Isophthalsäure.

Bei der Komponente B kann es sich also um ein Polyamid auf Basis von aromatischen Dicarbonsäuren mit 10 bis 18 Kohlenstoffatomen oder von aliphatischen Dicarbonsäuren mit 6 bis 36 C-Atomen oder eine Mischung solcher Homopolyamide und/oder Copolyamide handeln, bevorzugt auf Basis von Lactamen und/oder Aminocarbonsäuren, wobei es sich bei den aromatischen Dicarbonsäuren z.B. um TPS (Terephthalsäure) und/oder IPS (Isophthalsäure) handelt. Das (transparente) Homopolyamid und/oder Copolyamid kann vorteilhafterweise ein Polyamid sein ausgewählt aus der Gruppe: 6I6T, TMDT, 61/MACMI/MACMT, 61/6T/MACMI, MACMI/MACM36, 6I, Lactamhaltige Polyamide wie 12/PACMI, 12/MACMI, 12MACMT, 6/PACMT, 6/6I, 6/IPDT oder eine Mischung davon. Weitere mögliche Systeme sind: MACM12, MACM18 oder PACM12, MACM12/PACMI2, MACM18/PACMIB, 6I/PACMI/PACMT oder daraus gebildete Mischungen. Die Bezeichnung der Polyamide erfolgt gemäss ISO 1874-1. Dabei steht jeweils I für Isophthalsäure und T für Terephthalsäure, TMD für Trimethylhexamethylendiamin, IPD für Isophorondiamin.

Weiter ist es vorteilhaft und möglich, dass es sich beim Homopolyamid und/oder Copolyamid um ein Polyamid auf Basis wenigstens einer Dicarbonsäure und wenigstens eines Diamins mit einem aromatischen Kern handelt, bevorzugt auf Basis von MXD (meta-Xylylendiamin), wobei die Dicarbonsäure aromatisch und/oder aliphatisch sein kann, und wobei es sich z.B. bevorzugt um 6I/MXDI handelt.

Gemäss einer weiteren bevorzugten Ausführungsform ist eine solche Hydraulikleitung dadurch gekennzeichnet, dass die Komponente C ein Ethylen-α-Olefin-Copolymeres, insbesondere bevorzugt ein EP- und/oder EPDM-Elastomer (Ethylen-Propylen-Kautschuk respektive Ethylen-Propylen-Dien-Kautschuk), ist. So kann es sich beispielsweise um ein Elastomer handeln, welches basiert auf einem Ethylen-C₃₋₁₂-α-Olefin-Copolymer mit 20 bis 96, bevorzugt 25 bis 85 Gew.-% Ethylen, wobei es sich insbesondere bevorzugt bei dem C₃₋₁₂-α-Olefin um ein Olefin ausgewählt aus der Gruppe Propen, 1-Buten, 1-Penten, 1-Hexen, 1-Octen, 1-Decen und/oder 1-Dodecen handelt, und es sich insbesondere bevorzugt bei der Komponente C um Ethylen-Propylen-Kautschuk und/oder LLDPE und/oder VLDPE handelt.

Alternativ oder zusätzlich (beispielsweise in Mischung) kann es sich bei C um ein Terpolymeres auf Basis von Ethylen-C₃₋₁₂-α-Olefin mit einem unkonjugierten Dien handeln, wobei dieses bevorzugtermassen 25 bis 85 Gew.-% Ethylen und bis maximal im Bereich von 10 Gew.-% eines unkonjugierten Diens enthält, wobei es sich insbesondere bevorzugt bei dem C₃₋₁₂-α-Olefin um ein Olefin ausgewählt aus der Gruppe Propen, 1-Buten, 1-Penten, 1-Hexen, 1-Octen, 1-Decen und/oder 1-Dodecen handelt, und/oder wobei das unkonjugierte Dien bevorzugt ausgewählt ist aus der Gruppe Bicyclo(2.2.1)heptadien, Hexadien-1.4, Dicyclopentadien und/oder insbesondere 5-Ethylidennorbornen.

In Frage für die Komponente C kommen zudem auch Ethylen-Acrylat-Copolymere.

Weitere mögliche Formen für die Komponente C sind die Ethylen-Butylen-Copolymere beziehungsweise Mischungen (Blends), welche derartige Systeme enthalten.

Bevorzugtermassen verfügt die die Komponente C über Säureanhydridgruppen, die durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht, wobei dafür Reagentien ausgewählt aus der folgenden Gruppe bevorzugtermassen eingesetzt werden: Maleinsäure, Maleinsäureanhydrid, Maleinsäuremonobutylester, Fumarsäure, Aconitsäure und/oder Itaconsäureanhydrid. Vorzugsweise werden 0.1 bis 4.0 Gew.-% eines ungesättigten Anhydrids an die Schlagzähkomponente C aufgepfropft oder das ungesättigte Dicarbonsäureanhydrid oder dessen Vorstufe wird zusammen mit einem weiteren ungesättigten Monomeren aufgepfropft.

Generell ist der Pfropfgrad bevorzugtermassen in einem Bereich von 0.1-1.0 %, insbesondere bevorzugt in einem Bereich von 0.3-0.7%.

Auch möglich als Komponente C als ist eine Mischung aus einem Ethylen-Propylen-Copolymer und einem Ethylen-Butylen-Copolymer, dies mit einem Maleinsäureanhydrid-Pfropfgrad (MAH-Propfgrad) im Bereich von 0.3-0.7 %.

Die oben angegebenen möglichen Systeme für die Komponente können auch in Mischungen verwendet werden.

Bezüglich der Additive in der Komponente D sei erwähnt, dass diese ausgewählt aus folgender Gruppe sein können: Stabilisatoren wie UV-Stabilisatoren, Hitzestabilisatoren, Radikalfänger, Stabilisierungsmittel, Farbe, Nukleationsmittel, Verarbeitungshilfsstoffe, Weichmacher, weitere Polymere, nanoskalige Füll- und/oder Funktionsstoffe, Gleitmittel, Pigmente, Flammschutzzusätze, Verstärkungsmittel oder Kombinationen oder Mischungen davon.

Die oben erwähnte Zusammensetzung erlaubt, wie bereits erläutert, Hydraulikleitungen mit einer Länge von mehr als 0.7m, bevorzugtermassen von mehr als 1.0m. Die derart aufgebauten Hydraulikleitungen verfügen bevorzugtermassen bei Raumtemperatur über eine auf 1m Länge normierte Volumenaufnahme (Volumenexpansion) bei Raumtemperatur und 25 bar von weniger als 100 mm³/m und/oder bei 80°C von weniger als 350 mm³/m, und/oder bei 120 °C von weniger als 600 mm³, insbesondere bevorzugt von weniger als 500 mm³/m.

Des Weiteren betrifft die vorliegende Erfindung ein Verfahren zur Herstellung einer Hydraulikleitung, wie sie oben beschrieben wurde. Das Verfahren ist insbesondere dadurch gekennzeichnet, dass die Komponenten A-C in einer Mischung (als Mischung eines Granulates aus den einzelnen Komponenten oder als Granulat der gemischten Komponenten) vorgelegt werden und in einem Extrusionsprozess zu einer Leitung verarbeitet werden, wobei die Extrusion bevorzugtermassen bei einer Zylindertemperatur von mehr als 200 °C, bevorzugtermassen im Bereich von 220-280 °C durchgeführt wird.

Weitere bevorzugte Ausführungsformen der Erfindung sind in den abhängigen Ansprüchen angegeben.

### KURZE ERLÄUTERUNG DER FIGUREN

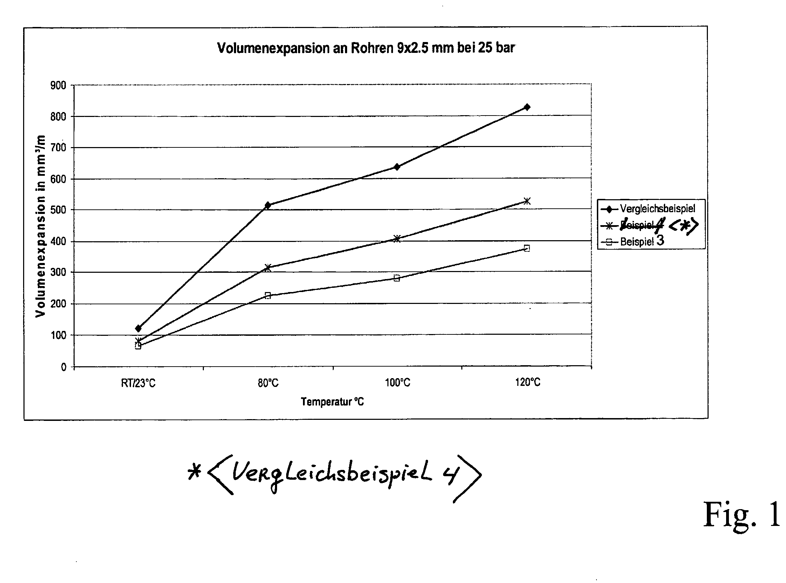

Die Erfindung soll nachfolgend anhand von Ausführungsbeispielen im Zusammenhang mit der einzigen Figur näher erläutert werden. Es zeigt dabei Fig. 1 die Volumenausdehnung (Volumenexpansion) als Funktion der Temperatur bei einem Druck von 25 bar für ein Beispiel nach der Erfindung und zwei Vergleichsbeispiele.

### WEGE ZUR AUSFÜHRUNG DER ERFINDUNG

Die vorliegende Offenbarung betrifft Kupplungs- bzw. Hydraulikleitungen aus einer polymeren Zusammensetzung, enthaltend Polyamid PA610, ein amorphes und/oder mikrokristallines Polyamid sowie einen Schlagzähmodifikator auf Basis von Ethylen- und/oder Propylen-Copolymeren. Die anfolgend angegebenen Ausführungsbeispiele sollen dazu dienen, die Durchführbarkeit der Erfindung zu demonstrieren und dienen der Stützung der Patentansprüche. Sie sollen aber nicht zur einschränkenden Auslegung der Patentansprüche verwendet werden.

Die vorgeschlagenen Kupplungsleitungen zeigen eine geringe Volumenausdehnung unter Druckbelastung, so dass längere Kupplungsleitungen (insbesondere länger als 0.7m) realisiert werden können. Die geringe Volumenausdehnung trägt auch dazu bei, dass der Druckpunkt des Kupplungspedals weniger stark wandert.

Die sich am Markt befindlichen polymeren Standard-Kupplungsleitungen basieren weitgehend auf Polyamid-12 und erfüllen die geforderte geringe Volumenausdehnung unter Last nur bis zu einer Länge von 0.7 m. Zum Austausch der metallenen Kupplungsleitungen fordert der Markt aber auch längere Leitungen (beispielsweise für Rechtslenker).

Aus einer Reihe von Versuchen hat sich nun herausgestellt, dass die Anforderungen an eine "längere Kupplungsleitung" am besten durch folgende polymere Zusammensetzung erreicht werden können:
(A) 45 - 97 Gew.-% Polyamid 610
(B) 5 - 30 Gew.-%, amorphes oder mikrokristallines Polyamid
(C) 2 - 20 Gew.-% Copolymer auf Basis von Ethylen und/oder Propylen
(D) 1 - 10 Gew.-% Additive (Stabilisierung, Farbe, Nukleationsmittel, ...)

Die Komponenten A bis D ergeben zusammen 100%.

Bezüglich Komponente A wird vorteilhaft ein PA610 mit einer Lösungsviskosität ηᵣₑₗ, (gemessen in m-Kresol, 0.5 Gew.-%) im Bereich von 1.7 bis 2.8, insbesondere von 1.9 bis 2.5 eingesetzt. Bevorzugt wird des weiteren ein Aminoendgruppenüberschuss sowie eine Amionendgruppenkonzentration zwischen 20 und 120 mmol/kg, insbesondere zwischen 20 und 70 mmol/kg.

Das verwendete mikrokristalline Polyamid (Komponente B) besitzt eine Schmelzenthalpie im Bereich von 4 bis 40 J/g, insbesondere im Bereich von 4-25 J/g und ergibt solo verarbeitet aufgrund der feinverteilten, kleinen Kristallite (kleiner als die Wellenlänge des Lichtes) transparente Formteile. Davon abzugrenzen sind die amorphen Polyamide, deren Schmelzenthalpie kleiner als 4 J/g ist. Für die Erfindung vorteilhaft sind solche mikrokristallinen Polyamide, welche auf cycloaliphatischen Diaminen, wie z.B. MACM oder PACM basieren. Beispiele für solche Polyamide sind die Copolyamide PA MACMX/PACMY mit X, Y unabhängig voneinander zwischen 10 und 18 (bevorzugtermassen X=Y), mit einer PACM-Konzentration grösser 55 mol-%, insbesondere grösser 70 mol-%. Die Lösungsviskosität dieser PA liegt im Bereich von 1.4 bis 2.0, bevorzugt im Bereich von 1.6 bis 1.9. Auch bei dieser PA-Komponente ist es vorteilhaft, wenn die Amionendgruppen überwiegen.

Die amorphen Polyamide (Komponente B, Alternative) basieren ebenfalls auf aliphatischen und cycloaliphatischen Diaminen, zeigen aber keine oder nur eine sehr geringere Schmelzwärme (gemessen mittels DSC). Bevorzugt werden amorphe PA der Zusammensetzung MACMI/12, wobei der Gehalt an Laurinlactam bevorzugt kleiner als 35 mol-%, insbesondere kleiner 20 mol-% ist. Die Glasübergangstemperatur liegt oberhalb von 120°C, bevorzugt über 140°C und insbesondere im Bereich von 150 - 220 °C. Die relative Lösungsviskosität dieser PA liegt im Bereich von 1.4 bis 2.0, bevorzugt im Bereich von 1.6 bis 1.9. Weitere Beispiele für amorphe Polyamide werden oben angegeben, und sollen hier nicht nochmals diskutiert werden.

Geeignete Ethylen-α-Olefin-Copolymere (Komponente C) sind vorzugsweise EP- und EPDM-Elastomere:
Ethylen-α-Olefin-Elastomere: Ethylen-C₃ bis C₁₂-α-Olefin-Copolymere mit 20 bis 96, bevorzugt 25 bis 85 Gew.-% Ethylen. Als C₃ bis C₁₂-α-Olefin wird beispielsweise Propen, 1-Buten, 1-Penten, 1-Hexen, 1-Octen, 1-Decen oder 1-Dodecen eingesetzt, Typische Beispiele hierfür sind Ethylen-Propylen-Kautschuk sowie LLDPE und VLDPE.

Ethylen-α-Olefin-Dien-Terpolymere: Ethylen-C₃ bis C₁₂-α-Olefin-unkonjugiertes Dien-Terpolymeres mit 20 bis 96, bevorzugt 25 bis 85 Gew.-% Ethylen und bis maximal etwa 10 Gew.-% eines unkonjugierten Diens wie Bicyclo(2.2.1)heptadien, Hexadien-1.4, Dicyclopentadien, 1,5-Cyclooctadien, 5-Vinyl-2-norbornen oder insbesondere 5-Ethylidennorbornen. Als C₃ bis C₁₂-α-Olefin sind ebenfalls beispielsweise Propen, 1-Buten, 1-Penten, 1-Hexen, 1-Octen, 1-Decen oder 1-Dodecen geeignet.

Die Herstellung dieser Copolymere bzw. Terpolymere mit Hilfe eines Ziegler-Natta-Katalysators ist bekannt.

Die Komponente C enthält Säureanhydridgruppen, die auf bekannte Weise durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht. Geeignete Reagentien sind beispielsweise Maleinsäure, Maleinsäureanhydrid, Maleinsäuremonobutylester, Fumarsäure, Aconitsäure oder Itaconsäureanhydrid. Auf diese Weise sind vorzugsweise 0.1 bis 4.0 Gew.-% eines ungesättigten Anhydrids an die Schlagzähkomponente C aufgepfropft. Bevorzugte Pfropfgrade sind 0.1 - 1%, insbesondere bevorzugt ist 0.3 bis 0.7%. Gemäss dem Stand der Technik kann das ungesättigte Dicarbonsäureanhydrid oder dessen Vorstufe auch zusammen mit einem weiteren ungesättigten Monomeren aufgepfropft werden.

Beispiele für kommerziell erhältliche Schlagzähmodifier:
- TAFMER MC201: g-MAH (~0.6 %) Blend aus 67% EP Copolymer (20 mol% Propylen) + 33 % EB Copolymer (15mol-% Buten-1)): Mitsui Chemicals, Japan.
- TAFMER MH5010: g-MAH (~0.6 %) Ethylen-Butylen-Copolymer; Mitsui.
- TAFMER MH7010: g-MAH (~0.7 %) Ethylene-Butylen-Copolymer; Mitsui.
- TAFMER MH7020: g-MAH (~0.7 %) EP-Copolymer, Mitsui.
- EXXELOR VA1801: g-MAH (~0.7 %) EP-Copolymer; Exxon Mobile Chemical, US.
- EXXELOR VA 1803 : g-MAH (0.5-0.9 %) EP copolymer, amorph, , Exxon.
- EXXELOR VA1810: g-MAH (~0.5%) EP-Copolymer, Exxon
- EXXELOR MDEX 94-11: g-MAH (0.7 %) EPDM, Exxon.
- FUSABOND MN493D: g-MAH (~0.5 %) Ethylen-Octen-Copolymer, DuPont, US.

Auch ein Ethylen-Acrylat-Copolymer kann in Frage kommen, so ist z.B. FUSABOND A EB560D (g-MAH ("high") Ethylen-n-butyl-acrylat copolymer) zu nennen.

### Beispiele:

Die Herstellung der Compounds erfolgt auf einem Doppelwellen-Extruder ZSK 30 (d= 30 mm, L/D= 38, 8 Gehäuse) W&P-Coperion. Alle Komponenten wurden in den Einzug (Zone 1) dosiert. Die Formmassen wurden bei einer Schneckendrehzahl von 150 - 200 UPM und Zylindertemperaturen im Bereich von 240 bis 300 °C mit einem Durchsatz von 12 kg/h hergestellt. Vor der Weiterverarbeitung wurde das Granulat bei 100 °C 24 h getrocknet.

Anschliessend wurden diese Mischungen auf einer Arburg Allrounder 320-210-750 (Hydronica) Spritzgussmaschine zu den benötigten Probekörpern verarbeitet, wobei die Zylindertemperaturen zwischen 220 bis 280 °C und die Formtemperatur zwischen 20 und 80 °C lagen. Die Schneckendrehzahl betrug 150 bis 400 UPM.

### Rohrherstellung:

Die Herstellung der Rohre in der Dimension 9 x 2.5 mm erfolgte auf einer Nokia-Maillefer Rohrextrusionsanlage, bestehend aus mindestens einem Extruder, einem Rohrwerkzeug, einer Kalibriervorrichtung mit Vakuumtank, sowie einem Kühlbad und nachfolgend einer Abzugs- und Schneidevorrichtung.

Die eingesetzten Polyamidformmassen werden vor der Rohrherstellung für ca. 8 h bei 80 °C getrocknet. Das vorgetrocknete Material wird über einen Trichter in eine 3-Zonen Schnecke gefördert, bei Zylindertemperaturen von 220 bis 280°C aufgeschmolzen (Massetemperatur: 240 bis 280 °C) und homogenisiert, und ausgetragen über ein sogenanntes Rohrwerkzeug. Der noch plastische Vorformling wird mittels Abzugvorrichtung durch eine Kalibrierung (Hülsenkalibrierung) gezogen, wo der Vorformling im Vakuumtank (Druck: 0.1 bis 0.9 bar) in der Kalibrierung ausgeformt wird. Dabei wird das geformte Rohr je nach Abzugsgeschwindigkeit mehr oder weniger lange gekühlt (Länge der Kühlstrecke). Nach der gewünschten Abkühlung bzw. Kühlstrecke (Kühlbad- Temperatur: 10 bis 20 °C) wird das Rohr gewickelt oder geschnitten. Die Abzugsgeschwindigkeit liegt zwischen 20-60 m/min. Die einzelnen Zusammensetzungen sind in der unten angegebenen Tabelle zusammengestellt.

Beim Beispiel 5 wurde ein 2-Schichtrohr der Dimension 9 x 2.5 mm mit einer Innenschicht (Barriereschicht auf Basis PP) der Dicke 0.2 mm und einer Aussenschicht der Dicke 2.3 mm hergestellt. Die Aussenschicht basiert dabei auf der Formmasse von Beispiel 2.

An den daraus hergestellten Rohren respektive Prüfkörpern wurden Messungen vorgenommen, die Resultate davon sind ebenfalls in der unten angegebenen Tabelle zusammengestellt.

Die Messungen wurden nach folgenden Normen und an folgenden Prüfkörpern durchgeführt.

Zug-E-Modul: ISO 527 mit einer Zuggeschwindigkeit von 1 mm/min; ISO-Zugstab , Norm: ISO/CD 3167, Typ Al, 170 x 20/10 x 4 mm, Temperatur 23 °C.

Reissfestigkeit und Reissdehnung: ISO 527 mit einer Zuggeschwindigkeit von 50 mm/min; ISO-Zugstab , Norm: ISO/CD 3167, Typ Al, 170 x 20/10 x 4 mm, Temperatur 23 °C.

Schlagzähigkeit nach Charpy: ISO 179/*eU; ISO-Prüfstab, Norm: ISO/CD 3167, Typ 91, 80 x 10 x 4 mm, Temperatur 23 °C; * 1 = nicht instrumentiert, 2 = instrumentiert. Kerbschlagzähigkeit nach Charpy: ISO 179/*eA; ISO-Prüfstab, Norm: ISO/CD 3167, Typ B1, 80 x 10 x 4 mm, Temperatur 23 °C; * 1 = nicht instrumentiert, 2 = instrumentiert.

Glasumwandlungstemperatur (Tg), Schmelztemperatur (Tₘ), Schmelzenthalpie (ΔH): ISO-Norm 11357-1/-2; Granulat

Die Differential Scanning Calorimetry (DSC) wurde mit Aufheizrate von 20 °C/min durchgeführt. Angegeben wird für T_{g} die Temperatur für den Onset.

Relative Viskosität: DIN EN ISO 307, in 0,5 Gew.-%-iger m-Kresollösung, Temperatur 20 °C.

MVR: (Melt volume rate) nach ISO 1133 bei 275°C.

Kälteschlagtest: DIN Pendelschlag nach DIN 73378/DIN 53453, PSA Falltest nach D41 1235

Lagerung in DOT4: Das Diffusionsverhalten der Rohre wird durch Bestimmung des Wassergehaltes in DOT4 nach einer Lagerungsdauer von 500 und 1000 Stunden bei 23°C gemäss der Prüfvorschrift PV3315 (VW) sowie 72 Stunden bei 70 °C ermittelt.

Die chemische Beständigkeit der Rohre gegenüber der Hydraulikflüssigkeit DOT4 wird gemäss FTE-TL 082 Punkt 4.2 ermittelt. Dazu werden Rohrabschnitte mit DOT4 befüllt und mit Messingverschraubungen verschlossen. Nach einer Lagerung bei 120 °C über eine Dauer von 30 Tagen werden die Rohrabschnitte und die im Rohr befindliche Flüssigkeit auf sichtbare Veränderungen untersucht.

Berstdruck: Durchführung gemäss DIN 53758 "Kurzzeit-Innendruckversuch an Hohlkörpern"

Vergleichsspannung (σ): Die Vergleichsspannung, eine dimensionsunabhängige Kenngrösse zur Beurteilung der Innendruckfestigkeit einer Formmasse, wird nach DIN 73378 berechnet aus der Formel σ [MPa] = PB*(d - s) / (20 s), wobei d = mittlerer Aussendurchmesser in mm, s = minimale Wandstärke in mm, PB = Berstdruck in bar Volumenaufnahme (Volumenexpansion): Die Messung der Volumenzunahme wurde bei 25 bar gemäss DIN EN ISO 6801 an 9 x 2.5 mm Rohren durchgeführt.

Wenn in der Tabelle nicht anders vermerkt, werden die Prüfkörper für den Zugversuch im trockenen Zustand verwendet. Dazu werden die Prüfkörper nach dem Spritzguss mindestens 48 h bei Raumtemperatur in trockener Umgebung gelagert. Die Rohre werden vor der Prüfung konditioniert.

### Verwendete chemische Systeme:

| | |
|---|---|
| Schlagzähmodifier: | Tafmer MC201, Mitsui Chemicals, Japan |
| PA610: | Polyamid-610 mit ηᵣₑₗ = 2.25, NH₂-Endgruppen: 60 mmol/kg |
| PA12: | GRILAMID L25H, EMS-CHEMIE AG, Schweiz |
| PA MACMI/12: | GRILAMID TR, EMS-CHEMIE AG, Schweiz |
| PA MACM12/PACM12: | GRILAMID TR, EMS-CHEMIE AG, Schweiz |
| PP: | Admer QB510E ist ein Polypropylen-Homopolymer gepfropft mit MAH (~0.05 %), Mitsui Chemicals, Japan. |

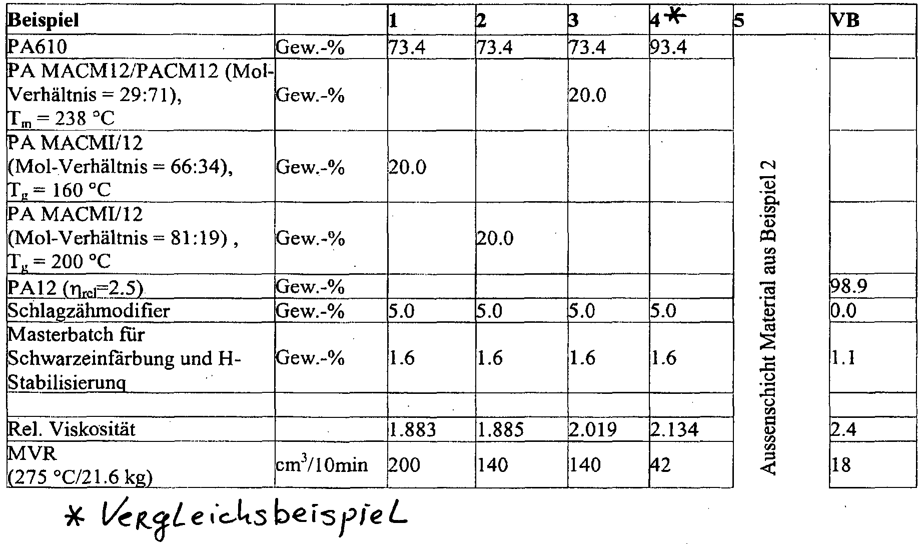

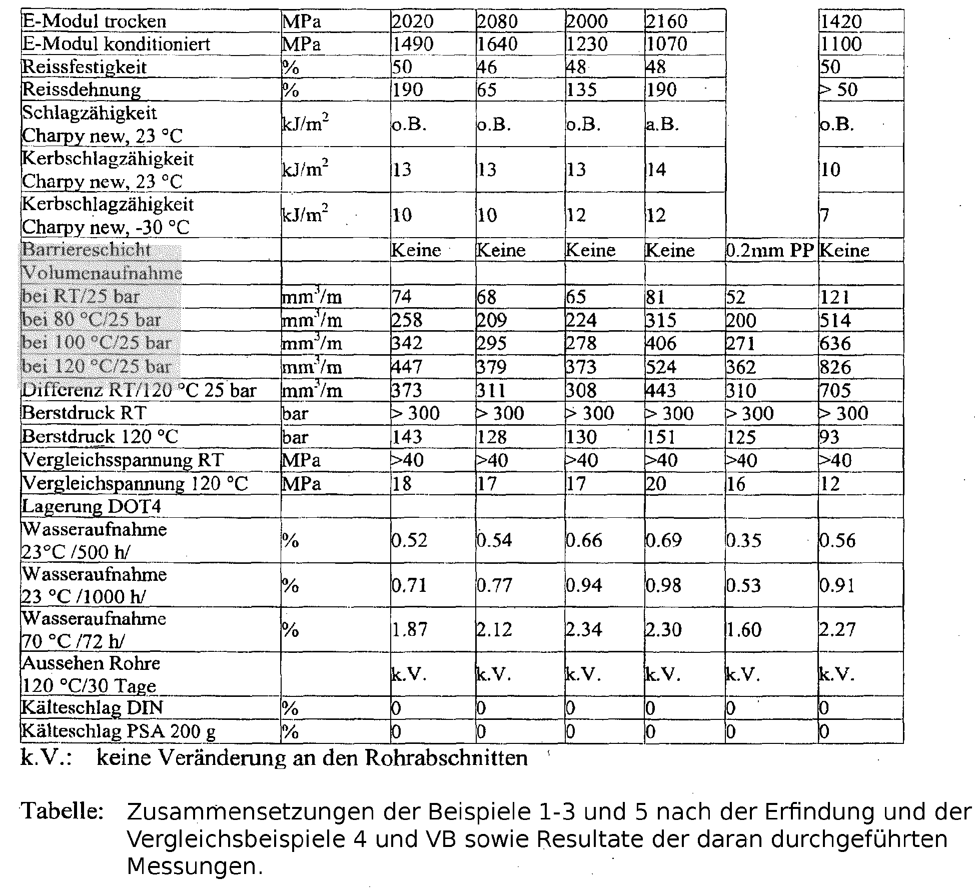

Aus der Tabelle sowie insbesondere aus der angefügten Figur wird ersichtlich, dass die vorgeschlagene Formmasse tatsächlich zu Hydraulikleitungen führt, welche ein unerwartet verbessertes Verhalten bezüglich der Volumenexpansion aufweisen. Dies insbesondere nicht nur bei Raumtemperatur sondern ganz besonders bei erhöhter Temperatur, wie sie bei den im Kraftfahrzeugbereich üblicherweise vorliegenden Bedingungen relevant ist. Entsprechend konnte vorliegend nachgewiesen werden, dass sich die erfindungsgemässe Wirkung tatsächlich einstellt.

## Patentansprüche

1. Hydraulikleitung, insbesondere Kupplungsleitung, für Fahrzeuge auf Basis von thermoplastischen Polymeren, enthaltend mindestens eine Schicht aus einer Formmasse auf Basis von Polyamid, **dadurch gekennzeichnet, dass** die Polyamid-Formmasse aus einer Mischung aus folgenden Bestandteilen
(A) 45 - 97 Gew.-% Polyamid 610;
(B) 5 - 30 Gew.-% amorphes und/oder mikrokristallines Polyamid und/oder Copolyamid, mit einer Glasübergangstemperatur oberhalb von 120 °C;
(C) 2 - 20 Gew.-% Schlagzähkomponente in Form eines Copolymers auf Basis von Ethylen und/oder Propylen
(D) 1 - 10 Gew.-% Additive
aufgebaut ist, mit der Massgabe, dass die Summe der Komponenten A-D 100 Gew.-% ergibt.

2. Hydraulikleitung nach Anspruch 1, **dadurch gekennzeichnet, dass** die Komponente B in einem Anteil von 5-20 Gew.-% vorliegt.

3. Hydraulikleitung nach einem der vorhergehenden Ansprüche, **dadurch gekennzeichnet, dass** die Hydraulikleitung eine Monoleitung ist, welche nur aus einer Schicht aus der genannten Polyamid-Formmasse besteht oder welche aus mehreren Schichten der genannten Polyamid-Formmasse besteht.

4. Hydraulikleitung nach einem der vorhergehenden Ansprüche, **dadurch gekennzeichnet, dass** die Hydraulikleitung eine Mehrschichtleitung, insbesondere bevorzugt eine 2-Schichtleitung, ist, wobei bevorzugtermassen wenigstens eine der weiteren Schichten eine Barriereschicht ist.

5. Hydraulikleitung nach einem der vorhergehenden Ansprüche, **dadurch gekennzeichnet, dass** die Komponente A ein PA610 eine Lösungsviskosität ηᵣₑₗ, gemessen in m-Kresol, bei 0.5 Gew.-% und 20 °C, im Bereich von 1.7 bis 2.8, insbesondere von 1.9 bis 2.5 aufweist und/oder dass die Komponente B eine Lösungsviskosität ηᵣₑₗ, gemessen in m-Kresol, bei 0.5 Gew.-% und 20 °C, im Bereich von 1.4 bis 2.0, insbesondere von 1.6 bis 1.9 aufweist.

6. Hydraulikleitung nach einem der vorhergehenden Ansprüche, **dadurch gekennzeichnet, dass** die Komponente A ein PA610 mit Aminoendgruppenüberschuss ist, bevorzugtermassen mit einer Amionendgruppenkonzentration zwischen 20 und 120 mmol/kg, bevorzugtermassen zwischen 20 und 70 mmol/kg, und/oder dass die Komponente B einen Aminoendgruppenüberschuss aufweist.

7. Hydraulikleitung nach einem der vorhergehenden Ansprüche, **dadurch gekennzeichnet, dass** die Komponente B ein mikrokristallines Polyamid und/oder Copolyamid mit einer Schmelzenthalpie im Bereich von 4-40 J/g, insbesondere im Bereich von 4-25 J/g, ist und/oder derart ausgebildet ist, dass das mikrokristalline Polyamid und/oder Copolyamid, wenn ohne weitere Bestandteile verarbeitet, transparente Formteile ergibt.

8. Hydraulikleitung nach einem der vorhergehenden Ansprüche, **dadurch gekennzeichnet, dass** die Komponente B ein mikrokristallines Polyamid und/oder Copolyamid auf Basis eines cycloaliphatischen Diamins und/oder Diamins mit aromatischem Kern, ist, insbesondere auf Basis von cycloaliphatischen Diaminen und aliphatischen Dicarbonsäuren mit 10 bis 18 Kohlenstoffatomen, wobei es sich beim cycloaliphatischen Diamin bevorzugt um MACM und/oder PACM und bei der Komponente B als Ganzes insbesondere bevorzugt um ein Copolyamid des Typs MACM/PACM jeweils mit aliphatischen Dicarbonsäuren mit 10 bis 18 Kohlenstoffatomen, handelt, bevorzugtermassen mit einer PACM-Konzentration grösser 55 mol-%, insbesondere grösser 70 mol-%.

9. Hydraulikleitung nach einem der vorhergehenden Ansprüche, **dadurch gekennzeichnet, dass** die Komponente B ein amorphes Polyamid und/oder Copolyamid mit einer Schmelzenthalpie von weniger als 4 J/g ist.

10. Hydraulikleitung nach einem der vorhergehenden Ansprüche, **dadurch gekennzeichnet, dass** die Komponente B ein amorphes Polyamid und/oder Copolyamid auf Basis von aliphatischen und/oder cycloaliphatischen Diaminen ist, bevorzugt werden amorphe Polyamide des Typs MACMI/12, wobei der Gehalt an Laurinlactam in diesem Fall insbesondere bevorzugt kleiner als 35 mol-%, insbesondere kleiner 20 mol-% ist.

11. Hydraulikleitung nach einem der vorhergehenden Ansprüche, **dadurch gekennzeichnet, dass** die Komponente B eine Glasübergangstemperatur von mehr als 140 °C aufweist, bevorzugt von mehr als 150 °C.

12. Hydraulikleitung nach einem der vorhergehenden Ansprüche, **dadurch gekennzeichnet, dass** die Komponente C ein Ethylen-α-Olefin-Copolymeres und/oder ein Ethylen-α-Olefin-Dien-Terpolymer, beziehungsweise eine Mischung enthaltend derartige Systeme, ist.

13. Hydraulikleitung nach Anspruch 12, **dadurch gekennzeichnet, dass** es sich um ein Ethylen-C₃₋₁₂-α-Olefin-Copolymer mit 20 bis 96, bevorzugt 25 bis 85 Gew.-% Ethylen handelt, wobei es sich insbesondere bevorzugt bei dem C₃₋₁₂-α-Olefin um ein Olefin ausgewählt aus der Gruppe Propen, 1-Buten, 1-Penten, 1-Hexen, 1-Octen, 1-Decen und/oder 1-Dodecen handelt, und es sich insbesondere bevorzugt bei der Komponente C um Ethylen-Propylen-Kautschuk und/oder LLDPE und/oder VLDPE handelt.

14. Hydraulikleitung nach Anspruch 12, **dadurch gekennzeichnet, dass** es sich um ein Terpolymeres auf Basis von Ethylen-C₃₋₁₂-α-Olefin mit einem unkonjugierten Dien handelt, wobei dieses bevorzugtermassen 25 bis 85 Gew.-% Ethylen und bis maximal im Bereich von 10 Gew.-% eines unkonjugierten Diens enthält, wobei und wobei es sich insbesondere bevorzugt bei dem C₃₋₁₂-α-Olefin um ein Olefin ausgewählt aus der Gruppe Propen, 1-Buten, 1-Penten, 1-Hexen, 1-Octen, 1-Decen und/oder 1-Dodecen handelt, und/oder wobei das unkonjugierte Dien bevorzugt ausgewählt ist aus der Gruppe Bicyclo(2.2.1)heptadien, Hexadien-1.4, Dicyclopentadien und/oder insbesondere 5-Ethylidennorbornen.

15. Hydraulikleitung nach einem der vorhergehenden Ansprüche, **dadurch gekennzeichnet, dass** die Komponente C Säureanhydridgruppen aufweist, die durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht, wobei dafür Reagentien ausgewählt aus der folgenden Gruppe bevorzugtermassen eingesetzt werden: Maleinsäure, Maleinsäureanhydrid, Maleinsäuremonobutylester, Fumarsäure, Aconitsäure und/oder Itaconsäureanhydrid, und wobei vorzugsweise 0.1 bis 4.0 Gew.-%, bevorzugtermassen 0.1 - 1.0 %, insbesondere bevorzugt 0.3 - 0.7 %, eines ungesättigten Anhydrids an die Schlagzähkomponente C aufgepfropft werden oder das ungesättigte Dicarbonsäureanhydrid oder dessen Vorstufe zusammen mit einem weiteren ungesättigten Monomeren aufgepfropft wird.

16. Hydraulikleitung nach einem der vorhergehenden Ansprüche, **dadurch gekennzeichnet, dass** die Komponente C eine Mischung aus einem Ethylen-Propylen-Copolymer und einem Ethylen-Butylen-Copolymer ist, dies bevorzugtermassen mit einem Maleinsäureanhydrid-Pfropfgrad im Bereich von 0.3-0.7 %.

17. Hydraulikleitung nach einem der vorhergehenden Ansprüche, **dadurch gekennzeichnet, dass** die Komponente D Komponenten ausgewählt aus folgender Gruppe aufweist: Stabilisatoren wie UV-Stabilisatoren, Hitzestabilisatoren, Radikalfänger, Stabilisierungsmittel, Farbe, Nukleirungsmittel, Verarbeitungshilfsstoffe, Weichmacher, weitere Polymere, nanoskalige Füll- und/oder Funktionsstoffe, Gleitmittel, Pigmente, Flammschutzzusätze, Verstärkungsmittel oder Kombinationen oder Mischungen davon.

18. Hydraulikleitung nach einem der vorhergehenden Ansprüche, **dadurch gekennzeichnet, dass** sie eine Länge von mehr als 0.7 m, bevorzugtermassen von mehr als 1.0m aufweist, und insbesondere bevorzugt bei Raumtemperatur eine Volumenaufnahme bei Raumtemperatur und 25 bar von weniger als 100 mm³/m und/oder bei 80 °C von weniger als 350 mm³/m aufweist, und/oder bei 120 °C von weniger als 600 mm³/m, insbesondere bevorzugt von weniger als 500 mm³/m aufweist.

19. Verfahren zur Herstellung einer Hydraulikleitung nach einem der vorhergehenden Ansprüche, **dadurch gekennzeichnet, dass** die Komponenten A-C in einer Mischung vorgelegt werden und in einem Extrusionsprozess zu einer Leitung verarbeitet werden.

20. Verfahren zur Herstellung einer Hydraulikleitung nach Anspruch 19, **dadurch gekennzeichnet, dass** die Extrusion bei einer Zylindertemperatur von mehr als 200 °C, bevorzugtermassen im Bereich von 220-280 °C durchgeführt wird.

21. Verwendung einer Hydraulikleitung nach einem der Ansprüche 1-18 als Kupplungsleitung für ein Fahrzeug, bevorzugt in einer Länge von mehr als 0.7 m.

22. Verwendung einer Hydraulikleitung nach einem der Ansprüche 1-18 als Kupplungsleitung für ein Fahrzeug, in einer Länge von mehr als 1.0 m.

## Claims

1. Hydraulic line, in particular clutch line, for vehicles based on thermoplastic polymers, comprising at least one layer made of a moulding composition based on polyamide, **characterized in that** the polyamide moulding composition is composed of a mixture of the following constituents:
(A) from 45 to 97% by weight of nylon-6,10;
(B) from 5 to 30% by weight of amorphous and/or microcrystalline polyamide and/or copolyamide, with glass transition temperature above 120°C;
(C) from 2 to 20% by weight of impact-resistance component in the form of a copolymer based on ethylene and/or propylene
(D) from 1 to 10% by weight of additives,
with the proviso that the entirety of components A-D gives 100% by weight.

2. Hydraulic line according to Claim 1, **characterized in that** the proportion present of component B is from 5 to 20% by weight.

3. Hydraulic line according to any of the preceding claims, **characterized in that** the hydraulic line is a monoline which is composed only of one layer of the polyamide moulding composition mentioned or is composed of a plurality of layers of the polyamide moulding composition mentioned.

4. Hydraulic line according to any of the preceding claims, **characterized in that** the hydraulic line is a multilayer line, with particular preference a 2-layer line, where at least one of the other layers is preferably a barrier layer.

5. Hydraulic line according to any of the preceding claims, **characterized in that** the solution viscosity ηᵣₑₗ of component A, a PA610, measured in m-cresol at 0.5% by weight and 20°C, is in the range from 1.7 to 2.8, in particular from 1.9 to 2.5 and/or that the solution viscosity ηᵣₑₗ of component B, measured in m-cresol at 0.5% by weight and 20°C, is in the range from 1.4 to 2.0, in particular from 1.6 to 1.9.

6. Hydraulic line according to any of the preceding claims, **characterized in that** component A is a PA610 with an excess of terminal amino groups, preferably with a concentration of terminal amino groups of from 20 to 120 mmol/kg, preferably from 20 to 70 mmol/kg, and/or that component B has an excess of terminal amino groups.

7. Hydraulic line according to any of the preceding claims, **characterized in that** component B is a microcrystalline polyamide and/or copolyamide with enthalpy of fusion in the range from 4 to 40 J/g, in particular in the range from 4 to 25 J/g, and/or is such that when the microcrystalline polyamide and/or copolyamide is processed without other constituents it gives transparent mouldings.

8. Hydraulic line according to any of the preceding claims, **characterized in that** component B is a microcrystalline polyamide and/or copolyamide based on a cycloaliphatic diamine and/or on a diamine having an aromatic ring, in particular based on cycloaliphatic diamines and on aliphatic dicarboxylic acids having from 10 to 18 carbon atoms, where the cycloaliphatic diamine is preferably MACM and/or PACM and component B in its entirety is with particular preference a copolyamide of MACM/PACM type, in each case using aliphatic dicarboxylic acids having from 10 to 18 carbon atoms, preferably with PACM concentration greater than 55 mol%, in particular greater than 70 mol%.

9. Hydraulic line according to any of the preceding claims, **characterized in that** component B is an amorphous polyamide and/or copolyamide with enthalpy of fusion below 4 J/g.

10. Hydraulic line according to any of the preceding claims, **characterized in that** component B is an amorphous polyamide and/or copolyamide based on aliphatic and/or cycloaliphatic diamines, preference being given to amorphous polyamides of the MACMI/12 type, where the content of laurolactam in this case is with particular preference less than 35 mol%, in particular less than 20 mol%.

11. Hydraulic line according to any of the preceding claims, **characterized in that** the glass transition temperature of component B is above 140°C, preferably above 150°C.

12. Hydraulic line according to any of the preceding claims, **characterized in that** component C is an ethylene-α-olefin copolymer and/or an ethylene-α-olefin-diene terpolymer, or a mixture comprising systems of this type.

13. Hydraulic line according to Claim 12, **characterized in that** the material is an ethylene-C₃₋₁₂-α-olefin copolymer using from 20 to 96% by weight, preferably from 25 to 85% by weight, of ethylene, where with particular preference the C₃₋₁₂-α-olefin is an olefin selected from the group of propene, 1-butene, 1-pentene, 1-hexene, 1-octene, 1-decene and/or 1-dodecene, and with particular preference component C is ethylene-propylene rubber and/or LLDPE and/or VLDPE.

14. Hydraulic line according to Claim 12, **characterized in that** the material is a terpolymer based on ethylene-C₃₋₁₂-α-olefin using an unconjugated diene, where this preferably comprises from 25 to 85% by weight of ethylene and up to at most in the region of 10% by weight of an unconjugated diene, and where with particular preference the C₃₋₁₂-α-olefin is an olefin selected from the group of propene, 1-butene, 1-pentene, 1-hexene, 1-octene, 1-decene and/or 1-dodecene, and/or where the unconjugated diene is preferably selected from the group of bicyclo[2.2.1]heptadiene, 1,4-hexadiene, dicyclopentadiene and/or in particular 5-ethylidenenorbornene.

15. Hydraulic line according to any of the preceding claims, **characterized in that** component C has anhydride groups which are introduced via thermal or free-radical reaction of the main-chain polymer with an unsaturated dicarboxylic anhydride, with an unsaturated dicarboxylic acid or with an unsaturated monoalkyl dicarboxylate at a concentration that is sufficient for good coupling to the polyamide, where this is preferably achieved by using reagents selected from the following group: maleic acid, maleic anhydride, monobutyl maleate, fumaric acid, aconitic acid and/or itaconic anhydride, and where from 0.1 to 4.0% by weight, preferably from 0.1 to 1.0% by weight, with particular preference from 0.3 to 0.7% by weight, of an unsaturated anhydride is/are preferably grafted onto the impact-resistance component C or the unsaturated dicarboxylic anhydride or precursor thereof is grafted together with another unsaturated monomer onto the material.

16. Hydraulic line according to any of the preceding claims, **characterized in that** component C is a mixture of an ethylene-propylene copolymer with an ethylenebutylene copolymer, the preferred degree of maleic-anhydride grafting of this material being in the range from 0.3 to 0.7%.

17. Hydraulic line according to any of the preceding claims, **characterized in that** component D comprises components selected from the following group: stabilizers such as UV stabilizers, heat stabilizers, free-radical scavengers, other stabilizers, colour, nucleating agents, processing aids, plasticizers, other polymers, nano-scale fillers and/or nano-scale agents, lubricants, pigments, flame retardant additions, reinforcing agents and combinations and mixtures thereof.

18. Hydraulic line according to any of the preceding claims, **characterized in that** its length is more than 0.7 m, preferably more than 1.0 m, and with particular preference its volumetric expansion is less than 100 mm³/m at room temperature and 25 bar and/or less than 350 mm³/m at 80°C, and/or less than 600 mm³/m, with particular preference less than 500 mm³/m, at 120°C.

19. Process for the production of a hydraulic line according to any of the preceding claims, **characterized in that** components A-C are used as initial charge in a mixture and are processed in an extrusion process to give a line.

20. Process for the production of a hydraulic line according to Claim 19, **characterized in that** the barrel temperature during the extrusion process is above 200°C, preferably in the range from 220 to 280°C.

21. Use of a hydraulic line according to any of Claims 1 to 18 as clutch line for a vehicle, preferably with length more than 0.7 m.

22. Use of a hydraulic line according to any of Claims 1 to 18 as clutch line for a vehicle, with length more than 1.0 m.

## Revendications

1. Conduit hydraulique, en particulier conduit d'embrayage, pour véhicules, à base de polymères thermoplastiques, contenant au moins une couche d'une matière moulée à base de polyamide, **caractérisé en ce que** la matière moulée à base de polyamide est constituée d'un mélange des composants suivants
(A) 45 - 97 % en poids de polyamide 610 ;
(B) 5 - 30 % en poids de polyamide et/ou copolyamide amorphe et/ou microcristallin, ayant une température de transition vitreuse supérieure à 120 °C ;
(C) 2 - 20 % en poids d'un composant antichoc sous forme d'un copolymère à base d'éthylène et/ou de propylène
(D) 1 - 10 % en poids d'additifs,
étant entendu que la somme des composants A-D est égale à 100 % en poids.

2. Conduit hydraulique selon la revendication 1, **caractérisé en ce que** le composant B est présent en une proportion de 5-20 % en poids.

3. Conduit hydraulique selon l'une quelconque des revendications précédentes, **caractérisé en ce que** le conduit hydraulique est un monoconduit qui consiste seulement en une couche de ladite matière moulée à base de polyamide ou qui consiste en plusieurs couches de ladite matière moulée à base de polyamide.

4. Conduit hydraulique selon l'une quelconque des revendications précédentes, **caractérisé en ce que** le conduit hydraulique est un conduit multicouche, de façon particulièrement préférée un conduit bicouche, de préférence au moins l'une des couches supplémentaires étant une couche barrière.

5. Conduit hydraulique selon l'une quelconque des revendications précédentes, **caractérisé en ce que** le composant A, un PA610, présente une viscosité en solution ηᵣₑₗ, mesurée dans du m-crésol, à 0,5 % en poids et à 20 °C, dans la plage de 1,7 à 2,8, en particulier de 1,9 à 2,5 et/ou **en ce que** le composant B présente une viscosité en solution ηᵣₑₗ, mesurée dans du m-crésol, à 0,5 % en poids et à 20 °C, dans la plage de 1,4 à 2,0, en particulier de 1,6 à 1,9.

6. Conduit hydraulique selon l'une quelconque des revendications précédentes, **caractérisé en ce que** le composant A est un PA610 ayant un excès de groupes terminaux amino, de préférence ayant une concentration de groupes terminaux amino comprise entre 20 et 120 mmoles/kg, de préférence entre 20 et 70 mmoles/kg, et/ou **en ce que** le composant B présente un excès de groupes terminaux amino.

7. Conduit hydraulique selon l'une quelconque des revendications précédentes, **caractérisé en ce que** le composant B est un polyamide et/ou copolyamide microcristallin ayant une enthalpie de fusion dans la plage de 4-40 J/g, en particulier dans la plage de 4-25 J/g, et/ou est constitué de manière que le polyamide et/ou copolyamide microcristallin, s'il est mis en oeuvre sans autres composants, donne des pièces moulées transparentes.

8. Conduit hydraulique selon l'une quelconque des revendications précédentes, **caractérisé en ce que** le composant B est un polyamide et/ou copolyamide microcristallin à base d'une diamine cycloaliphatique et/ou d'une diamine à noyau aromatique, en particulier à base de diamines cycloaliphatiques et d'acides dicarboxyliques aliphatiques ayant de 10 à 18 atomes de carbone, la diamine cycloaliphatique consistant de préférence en MACM et/ou PACM et le composant B dans son ensemble consistant de façon particulièrement préférée en un copolyamide du type MACM/PACM comportant chaque fois des acides dicarboxyliques aliphatiques ayant de 10 à 18 atomes de carbone, de préférence avec une concentration de PACM supérieure à 55 % en moles, en particulier supérieure à 70 % en moles.

9. Conduit hydraulique selon l'une quelconque des revendications précédentes, **caractérisé en ce que** le composant B est un polyamide et/ou copolyamide amorphe ayant une enthalpie de fusion de moins de 4 J/g.

10. Conduit hydraulique selon l'une quelconque des revendications précédentes, **caractérisé en ce que** le composant B est un polyamide et/ou copolyamide amorphe à base de diamines aliphatiques et/ou cycloaliphatiques, les polyamides amorphes du type MACMI/12 sont préférés, la teneur en lauryllactame étant en ce cas de façon particulièrement préférée inférieure à 35 % en moles ; en particulier inférieure à 20 % en moles.

11. Conduit hydraulique selon l'une quelconque des revendications précédentes, **caractérisé en ce que** le composant B présente une température de transition vitreuse de plus de 140 °C, de préférence de plus de 150 °C.

12. Conduit hydraulique selon l'une quelconque des revendications précédentes, **caractérisé en ce que** le composant C est un copolymère éthylène-α-oléfine et/ou un terpolymère éthylène-α-oléfine-diène, ou un mélange contenant de tels systèmes.

13. Conduit hydraulique selon la revendication 12, **caractérisé en ce qu'**il s'agit d'un copolymère éthylène-α-oléfine en C₃-C₁₂ comportant 20 à 96, de préférence 25 à 85 % en poids d'éthylène, l'α-oléfine en C₃-C₁₂ consistant de façon particulièrement préférée en une oléfine choisie dans le groupe constitué par le propène, le 1-butène, le 1-pentène, le 1-hexène, le 1-octène, le 1-décène et/ou le 1-dodécène, et pour ce qui est du composant C il s'agit de façon particulièrement préférée de caoutchouc éthylène-propylène et/ou de LLPDE et/ou VLPDE.

14. Conduit hydraulique selon la revendication 12, **caractérisé en ce qu'**il s'agit d'un terpolymère à base d'éthylène-α-oléfine en C₃-C₁₂ avec un diène non conjugué, ce terpolymère contenant de préférence 25 à 85 % en poids d'éthylène et jusqu'au maximum de l'ordre de 10 % en poids d'un diène non conjugué, et l'a-oléfine en C₃-C₁₂ consistant de façon particulièrement préférée en une oléfine choisie dans le groupe constitué par le propène, le 1-butène, le 1-pentène, le 1-hexène, le 1-octène, le 1-décène et/ou le 1-dodécène, et/ou le diène non conjugué étant choisi de préférence dans le groupe constitué par le bicyclo(2.2.1)heptadiène, l'hexadiène-1,4, le dicyclopentadiène et/ou en particulier le 5-éthylidène-norbonène.

15. Conduit hydraulique selon l'une quelconque des revendications précédentes, **caractérisé en ce que** le composant C comporte des groupes anhydride d'acide, qui sont introduits par une réaction thermique ou radicalaire du polymère de la chaîne principale avec un anhydride d'acide dicarboxylique insaturé, un acide dicarboxylique insaturé ou un ester monoalkylique d'acide dicarboxylique insaturé à une concentration qui est suffisante pour un bon attachement au polyamide, en utilisant pour cela de préférence des réactifs choisis dans le groupe suivant : acide maléique, anhydride maléique, maléate de monobutyle, acide fumarique, acide aconitique et/ou anhydride itaconique, et de préférence 0,1 à 4,0 % en poids, encore mieux 0,1 - 1,0 % en poids, de façon particulièrement préférée 0,3 - 0,7 % d'un anhydride insaturé étant greffés sur le composant antichoc C ou l'anhydride d'acide dicarboxylique insaturé ou ses précurseurs étant greffé(s) conjointement avec un autre monomère insaturé.

16. Conduit hydraulique selon l'une quelconque des revendications précédentes, **caractérisé en ce que** le composant C est un mélange d'un copolymère éthylène-propylène et d'un copolymère éthylène-butylène, cela de préférence avec un degré de greffage d'anhydride maléique dans la plage de 0,3-0,7 %.

17. Conduit hydraulique selon l'une quelconque des revendications précédentes, **caractérisé en ce que** le composant D comporte des composants choisis dans le groupe suivant : stabilisants tels que des stabilisants UV, stabilisants thermiques, capteurs de radicaux, agents de stabilisation, colorants, agents de nucléation, adjuvants de mise en oeuvre, plastifiants, autres polymères, substances fonctionnelles et/ou charges nanométriques, lubrifiants, pigments, additifs ignifuges, agents de renfort ou associations ou mélanges de ceux-ci.

18. Conduit hydraulique selon l'une quelconque des revendications précédentes, **caractérisé en ce qu'**il présente une longueur de plus de 0,7 m, de préférence de plus de 1,0 m, et de façon particulièrement préférée une augmentation de volume à la température ambiante et sous 25 bars de moins de 100 mm³/m et/ou à 80 °C de moins de 350 mm³/m, et/ou à 120 °C de moins de 600 mm³/m, de façon particulièrement préférée de moins de 500 mm³/m.

19. Procédé pour la fabrication d'un conduit hydraulique selon l'une quelconque des revendications précédentes, **caractérisé en ce qu'**on dispose au préalable les composants A-C en un mélange et on le transforme en un conduit dans un processus d'extrusion.

20. Procédé pour la fabrication d'un conduit hydraulique selon la revendication 19, **caractérisé en ce qu'**on effectue l'extrusion à une température de cylindre de plus de 200 °C, de préférence dans la plage de 220-280 °C.

21. Utilisation d'un conduit hydraulique selon l'une quelconque des revendications 1-18 en tant que conduit d'embrayage pour un véhicule, de préférence en une longueur de plus de 0,7 m.

22. Utilisation d'un conduit hydraulique selon l'une quelconque des revendications 1-18 en tant que conduit d'embrayage pour un véhicule, en une longueur de plus de 1,0 m.
